# EUROPÄISCHE PATENTSCHRIFT

(11) **EP 0 703 265 B1**
(45) Veröffentlichungstag und Bekanntmachung des Hinweises auf die Patenterteilung: **19.09.2001**
(21) Anmeldenummer: 95109493.7
(22) Anmeldetag: 20.06.1995
(51) Int. Cl.: C08J 3/12

(54) **Hydrophile, hochquellfähige Hydrogele**
Hydrophilic Hydrogels with elevated swelling capacity
Hydrogels hydrophiles à capacité de gonflement élevée

(30) Priorität: 22.07.1994 DE 4426008
(43) Veröffentlichungstag der Anmeldung: 27.03.1996
(73) Patentinhaber: BASF AKTIENGESELLSCHAFT, 67056 Ludwigshafen (DE)
(72) Erfinder: Engelhardt, Fritz, Dr., D-60386 Frankfurt am Main (DE); Herfert, Norbert, Dr., D-63674 Altenstadt (DE); Stüven, Uwe, D-65812 Bad Soden (DE); Riegel, Ulrich, D-60386 Frankfurt am Main (DE); Funk, Rüdiger, Dr., D-65527 Niedernhausen (DE); Seip, Detlev, Dr., D-65779 Kelkheim (DE)

(56) Entgegenhaltungen:
- EP-A- 0 321 755
- DE-A- 4 138 408
- GB-A- 2 046 275
- US-A- 4 979 946

## Beschreibung

Die vorliegende Erfindung betrifft hydrophile, hochquellfähige Hydrogele, die mit nicht reaktiven, wasserunlöslichen filmbildenden Polymeren beschichtet sind.

Hydrophile Hydrogele, die durch Polymerisation olefinisch ungesättigter Säuren, wie beispielsweise Acrylsäure, Methacrylsäure, Acrylamidopropansulfonsäure usw., in Gegenwart geringer Mengen mehrfach olefinisch ungesättigter Verbindungen erhalten werden können, sind bereits bekannt und beispielsweise beschrieben in US 4,057,521, US 4,062,817, US 4,525,527, US 4,286,082, US 4,340,706 und US 4,295,987.

Weiterhin sind auch hydrophile Hydrogele bekannt, die durch Pfropfcopolymerisation olefinisch ungesättigter Säuren auf unterschiedliche Matrices, wie beispielsweise Polysaccharide, Polyalkylenoxide sowie deren Derivate, zugänglich sind (z.B. US 5,011,892, US 4,076,663 und US. 4,931,497).

Die genannten Hydrogele zeichnen sich durch ein hohes Aufnahmevermögen für Wasser und wäßrige Lösungen aus und finden daher bevorzugt Anwendung als Absorptionsmittel in Hygieneartikeln.

Es ist bereits bekannt, daß die Eigenschaften dieser Hydrogele durch eine Oberflächenbehandlung mit bestimmten Substanzen modifiziert werden können. Zu diesem Zweck werden herkömmliche Hydrogele, die getrocknet, gemahlen und gegebenenfalls abgesiebt sind, in Pulverform mit reaktiven Verbindungen umgesetzt, d.h. mit Verbindungen, die mindestens zwei Gruppen enthalten, die mit den Carboxylgruppen der Hydrogele kovalente Bindungen bilden können. Es handelt sich also um eine Vernetzung, die auf der Oberfläche der Gelpartikel stattfindet.

Eine derartige Oberflächenvernetzung ist beispielsweise in der EP-A 543 303 (DE-A-4138408) beschrieben, wobei als Oberflächenvernetzer Mischungen aus Phosphonsäurediglycidylestern und weiteren reaktiven Verbindungen eingesetzt werden.

EP-A-0 321 755 offenbart ein Verfahren zur Agglomerierung wasserquellbarer Polymere durch Sintergranulation, indem man die wasserquellbaren Polymere zusammen mit einer Hilfssubstanz erwärmt, die die wasserquellbaren Polymere agglomerieren kann. Solche Hilfssubstanzen sind beispielsweise schmelzbare thermo- oder duroplastische Stoffe, die einen Schmelzpunkt oder -bereich bzw. einen Erweichungspunkt oder -bereich aufweisen.

Zahlreiche weitere Verfahren beschreiben die Oberflächenbehandlung und Vernetzung saug- und quellfähiger Polymerenpartikel mit reaktiven Verbindungen. So werden in der US 4043952 zur Verbesserung der Dispergierbarkeit in Wasser polyvalente Metallverbindungen und in der US 4051086 zur Verbesserung der Aufnahmegeschwindigkeit Glyoxal empfohlen. In den Dokumenten EP-A 83022 (zur verbesserten Dispergierbarkeit in Wasser und zur Verbesserung des Absorptionsvermögens), DE-A 3331644 (zur Verbesserung der Resistenz gegen Salzlösungen bei hoher Wasseraufnahmegeschwindigkeit), DE-A 3507775 (ebenfalls zur Erhöhung der Salzbeständigkeit bei guter Flüssigkeitsabsorption und Gelfestigkeit), DE-A 3523617 (zur Verbesserung der Fließfähigkeit und dem Verhindern des Zusammenbackens), DE-A 3628482 (zur Verbesserung der Wasseraufnahme bei wiederholter Verwendung) und EP-A 349240 (zur Erzielung eines Gleichgewichtes zwischen Absorptionsvermögen und Absorptionsgeschwindigkeit sowie Gelfestigkeit und Saugkraft) wird die Nachbehandlung von Polymeren mit zwei- oder mehrfunktionellen Gruppen enthaltenden Vernetzungsmitteln beschrieben, die mit den Carboxyl-oder Carboxylatgruppen oder anderen im Polymer enthaltenen Gruppen reagieren können. Hierbei wird entweder das Pulver direkt mit den Komponenten, ggf. unter Mitverwendung geringerer Mengen Wasser und Lösungsmittel, vermischt oder das Pulver in einem inerten Lösungsmittel dispergiert oder 10 bis 40 Gew.% Wasser enthaltende Polymere werden in einem hydrophilen oder hydrophoben Lösungsmittel dispergiert und anschließend oder gleichzeitig mit dem Vernetzungsmittel vermischt. Als Vernetzungsmittel können Polyglycidylether, Haloepoxiverbindungen, Polyole, Polyamine oder Polyisocyanate verwendet werden (siehe US 4666983). Neben diesen werden in DE-A 3314019, EP-A 317106 (jeweils zur Erreichung von hoher Absorptionsmenge und hoher Absorptionsgeschwindigkeit) und DE-A 3737196 (hohes Absorptionsvermögen und hohe Aufnahmegeschwindigkeit bei gleichzeitiger großer Gelfestigkeit) weiterhin polyfunktionelle Aziridinverbindungen, Alkyl-di-(tri)-halogenide und öllösliche Polyepoxiverbindungen erwähnt. In der DE-A 3503458 (zur Erzielung eines Polymeren mit gutem Wasserabsorptionsvermögen, hoher Wasserabsorptionsrate und hoher Gelfestigkeit bei nicht-klebrigem Gel) erfolgt die Aufbringung eines Vernetzungsmittels auf ein Polymerharz in Gegenwart eines inerten anorganischen Pulvermaterials wie SiO₂ ohne Verwendung organischer Lösungsmittel. Allen diesen Verfahren ist gemeinsam, daß anschließend eine Temperaturbehandlung der Harze erfolgt, sowie ferner, daß die zur Oberflächenbehandlung verwendeten Vernetzer wenigstens zwei funktionelle Gruppen aufweisen, d.h. reaktiv sind. DE-A 4020780 beschreibt ein Verfahren zur Oberflächenvernetzung von hydrophilen Absorptionsmitteln durch Behandlung mit Alkylencarbonaten und nachfolgender thermischer Behandlung bei 150-300°C. EP-A 509708 beschreibt ein Verfahren, welches die Oberflächenvernetzung carboxylgruppenhaltiger Polymerteilchen mit Polyhydroxylverbindungen in Kombination mit einer Tensidbeschichtung zum Inhalt hat.

All diesen nach oben beschriebenen Methoden hergestellten Polymerpulvern ist gemein, daß sie einen gewissen Anteil feinerer Partikel enthalten, die für das sogenannte Stauben verantwortlich sind und daß zum Teil diese Staubanteile infolge mechanischer Belastung wie z.B. durch pneumatische Förderung und dadurch bedingten Abrieb deutlich erhöht werden. Feinstaub einer Korngröße kleiner 10 µm ist aus inhalationstoxischen Gründen unerwünscht, Feinstaubanteile kleiner 100 µm verursachen das visuell sichtbare Stauben mit all seinen Folgeerscheinungen und führen zu Handlingsproblemen im Produktions- und im Verarbeitungsbetrieb und sind daher ebenfalls unerwünscht.

Desweiteren ist festzustellen, daß bei verschiedenen handelsüblichen Superabsorber-Produkten durch den durch mechanische Belastung bedingten Abrieb nicht nur der Staubanteil der Produkte erhöht wird, sondern auch eine Verschlechterung der physikalisch-chemischen Produkteigenschaften bewirkt wird.

Aufgabe vorliegender Erfindung ist es somit, staubfreie abriebbeständige hochquellfähige Absorptionsmittel für wäßrige Flüssigkeiten bereitzustellen. Diese Aufgabe wird überraschenderweise dadurch gelöst, daß an sich bekannte hydrophile, hochquellfähige Hydrogele mit nicht reaktiven, wasserunlöslichen filmbildenden Polymeren beschichtet werden.

Die vorliegende Erfindung betrifft somit ein hydrophiles, hochquellfähiges Hydrogel, dadurch gekennzeichnet, daß es mit einem nicht reaktiven, wasserunlöslichen filmbildenden Polymeren beschichtet ist, das bildet wobei das filmbildende Polymer in Mengen von > 0,5 bis 20 Gew.-% bezogen auf das Hydrogel eingesetzt wird im Temperaturbereich zwischen -1°C und 130°C Filmbildungsvermögen aufweist und dabei wasserunlösliche aber wasserdurchlässige oder in wäßrigen Lösungen quellbare Polymerfilme. Geeignete Polymere sind außerdem insbesondere solche, die Polymerfilme bilden, die im Temperaturbereich zwischen 0°C und 80°C nicht zum Verkleben neigen.

Schließlich sind geeignete Polymere insbesondere solche, die Polymerfilme bilden, die Reißfestigkeitswerte von 0,5 bis 15 Newton/mm und Reißdehnungswerte von 100% bis 1000% aufweisen.

Die erfindungsgemäß einzusetzenden Polymeren sind nicht reaktiv. Dies bedeutet im Rahmen vorliegender Erfindung, daß sie keine reaktiven Gruppen aufweisen, die mit den Carboxylgruppen an der Oberfläche der Hydrogelteilchen reagieren können.

Bevorzugte erfindungsgemäß einzusetzende Polymere sind Homo- und Copolymerisate von Vinylestern, insbesondere Vinylacetat-Homopolymerisate und Vinylacetat-Copolymerisate mit Ethylen, Acrylaten, Maleinsäureestern, Vinylamiden und/oder anderen Vinylacylderivaten.

Bevorzugt sind außerdem Homo- und Copolymerisate von Acryl- und Methacrylsäureestern, wie beispielsweise Copolymerisate von Methylmethacrylat und Acrylsäure-n-butylester oder Acrylsäure-2-ethylhexylester.

Die genannten Copolymerisate auf Basis Vinyl-, Acrylsäure- und Methacrylsäureestern können als weitere Comonomere beispielsweise Styrol, Butadien, Vinylamide, olefinisch ungesättigte Carbonsäuren und deren Derivate, olefinisch ungesättigte Sulfonsäuren und deren Derivate, Vinylphosphonsäure und deren Derivate oder Polyglykolester ungesättigter Säuren enthalten.

Beispiele für Vinylamide sind insbesondere N-Vinylformamid, N-Vinyl-N-methylacetamid und N-Vinylpyrrolidon.

Beispiele für olefinisch ungesätttigte Carbonsäuren sind insbesondere Acrylsäure, Methacrylsäure, Itaconsäure und Maleinsäure sowie deren Alkali-, Ammonium- und Aminsalze. Beispiele für Derivate dieser olefinisch ungesättigten Carbonsäuren sind insbesondere Amide, wie (Meth)acrylamid, N-tert-Butyl(meth)acrylamid und N-Isopropyl(meth)acrylamid, aber auch N-Methylolamide oder Ether der N-Methylolamide, Halbamide und Imide aliphatischer Amine, sowie Acrylnitril.

Beispiele für olefinisch ungesättigte Sulfonsäuren sind die Salze der Vinylsulfonsäure, 2-Acrylamido-2-methylpropansulfonsäure, Styrolsulfonsäure, Allyl- und Methallylsulfonsäure, insbesondere deren Alkali-, Ammoniumund Aminsalze.

Beispiele für Derivate der Vinylphosphonsäure sind insbesondere die Mono- und Diester von (C₁-C₁₈)-Alkoholen wie beispielsweise die Methyl-, Propyl- oder Stearylester. Die Vinylphosphonsäure selbst liegt insbesondere als Mono- oder Disalz vor, wobei die Alkali-, Ammonium- und Aminsalze bevorzugt sind.

Polyglykolester ungesättigter Säuren sind insbesondere Hydroxyethyl(meth)acrylat oder Ester der Acryl- und Methacrylsäure mit Polyalkylenoxidverbindungen der allgemeinen Formel 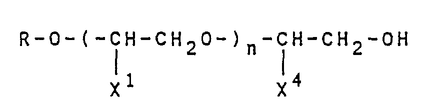 wobei
- X¹: Wasserstoff oder Methyl,
- n: 0 bis 50 und
- R: einen aliphatischen, araliphatischen oder cycloaliphatischen (C₁-C₂₄)-Rest, beispielsweise Nonylphenyl
bedeuten.

Bevorzugte erfindungsgemäß einzusetzende Polymere sind weiterhin filmbildende Polymere auf Basis von
- Polyacetalen, d.h. Umsetzungsprodukten von Polyvinylalkoholen mit Aldehyden wie beispielsweise Butyraldehyd,
- Polyurethanen, d.h. aus durch Polyaddition aus zwei- und höherwertigen Alkoholen und Isocyanaten zugänglichen Polymeren, beispielsweise hergestellt aus Polyester- und/oder Polyetherdiolen und zum Beispiel 2,4- bzw. 2,6-Toluoldiisocyanat, 4,4-Methylendi(phenylisocyanat) oder Hexamethylendiisocyanat (siehe auch in Houben-Weyl E20/2, 1561-1721),
- Polyharnstoffen, d.h. Polymeren, die zugänglich sind durch Polyaddition von Diaminen und Diisocyanaten oder durch Polykondensation von Diaminen mit Kohlenstoffdioxid, Phosgen, Carbonsäureestern (z.B. aktivierte Diphenylcarbonate) oder Harnstoff bzw. durch Umsetzung von Diisocyanaten mit Wasser (siehe Houben-Weyl E20/2, 1722),
- Polysiloxanen, wobei als Basispolymer insbesondere lineares Dimethylpolysiloxan verwendet wird, dessen Endgruppen unterschiedlich blockiert sein können (siehe "Chemie und Technologie des kalthärtenden Siliconkautschuks", 49-64 in SILICONE ― Chemie und Technologie, [Symposium am 28.04.89] VULKAN-VERLAG, Essen),
- Polyamiden, wobei Copolyamide (siehe Plaste Kautsch. 25, 440-444 (1978)) wie sie beispielsweise zur Herstellung von Lacken Verwendung finden, bevorzugt sind.
- Polyestern, d.h. Polymeren, die durch Ringöffnungspolymerisation von Lactonen oder durch Polykondensation von Hydroxycarbonsäuren bzw. von Diolen und Dicarbonsäurederivaten hergestellt werden (siehe Houben Weyl E20/2, 1404-1429),
- Epoxidharzen, die aus Polyepoxiden durch Polyadditionsreaktionen mit geeigneten Härtern oder durch Polymerisation über Epoxidgruppen hergestellt werden können (siehe hierzu Houben Weyl 14/2, 462-552 und E20, 1891-1994 (Beispiele sind Umsetzungsprodukte aus Bisphenol A mit Epichlorhydrin) oder auf Basis von
- Polycarbonaten, wie sie leicht durch Umsetzung von Diglykolen oder Bisphenolen mit Phosgen bzw. Kohlensäurediestern in Polykondensations- bzw. Umesterungsreaktionen herzustellen sind (siehe Houben Weyl) E 20/2, 1443-1457).

Besonders bevorzugte erfindungsgemäß einzusetzende Polymere sind Homo- und Copolymerisate von Acryl- und Methacrylsäureestern sowie Polymerisate auf Basis von Polyacetalen.

Soweit sie geeignete Filme ausbilden können, können auch Mischungen zweier oder mehrerer der oben genannten Polymere eingesetzt werden. Die Mischungsverhältnisse sind dabei vollkommen unkritisch und den jeweiligen Gegebenheiten anzupassen.

Die den erfindungsgemäßen Hydrogelen zugrunde liegenden hydrophilen, hochquellfähigen Hydrogele sind insbesondere Polymere aus (co)polymerisierten hydrophilen Monomeren, Pfropf(co)polymere von einem oder mehreren hydrophilen Monomeren auf eine geeignete Pfropfgrundlage, vernetzte Cellulose- oder Stärkeether oder in wäßrigen Flüssigkeiten quellbare Naturprodukte, wie beispielsweise Guarderivate. Diese Hydrogele sind bekannt und beispielsweise in den oben zitierten Literaturstellen beschrieben.

Geeignete hydrophile Monomere sind beispielsweise polymerisationsfähige Säuren, wie Acrylsäure, Methacrylsäure, Vinylsulfonsäure, Vinylphosphonsäure, Maleinsäure einschließlich dessen Anhydrid, Fumarsäure, Itaconsäure, 2-Acrylamido-2-methylpropansulfonsäure, 2-Acrylamido-2-methylpropanphosphonsäure sowie deren Amide, Hydroxyalkylester und aminogruppen- oder ammoniumgruppenhaltige Ester und Amide. Desweiteren wasserlösliche N-Vinylamide oder auch Diallyldimethylammoniumchlorid.

Bevorzugte hydrophile Monomere sind Verbindungen der allgemeinen Formel I 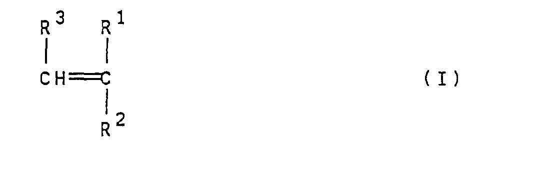 worin
- R¹: Wasserstoff, Methyl oder Ethyl,
- R²: die Gruppe -COOR⁴, die Sulfonylgruppe, die Phosphonylgruppe, die mit (C₁-C₄)-Alkanol veresterte Phosphonylgruppe oder eine Gruppe der Formel 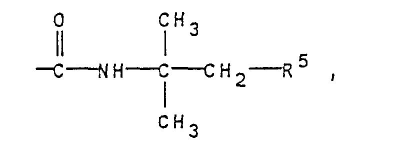
- R³: Wasserstoff, Methyl, Ethyl oder die Carboxylgruppe,
- R⁴: Wasserstoff, Amino oder Hydroxy-(C₁-C₄)-alkyl und
- R⁵: die Sulfonylgruppe, die Phosphonylgruppe oder die Carboxylgruppe
bedeuten.

Besonders bevorzugte hydrophile Monomere sind Acrylsäure und Methacrylsäure.

Geeignete Pfropfgrundlagen können natürlichen oder synthetischen Ursprungs sein. Beispiele sind Stärke, Cellulose oder Cellulosederivate sowie andere Polysaccharide und Oligosaccharide, Polyalkylenoxide, insbesondere Polyethylenoxide und Polypropylenoxide, sowie hydrophile Polyester.

Geeignete Polyalkylenoxide haben beispielsweise die Formel 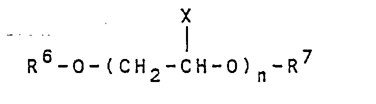 worin
- R⁶ und R⁷: unabhängig voneinander Wasserstoff, Alkyl, Alkenyl oder Aryl,
- X: Wasserstoff oder Methyl und
- n: eine ganze Zahl von 1 bis 10000 bedeuten.

R⁶ und R⁷ bedeuten bevorzugt Wasserstoff, (C₁-C₆)-Alkyl, (C₂-C₆)-Alkenyl oder Phenyl.

Bevorzugte Hydrogele sind insbesondere Polyacrylate, Polymethacryalate sowie die in US 4,931,497, US 5,011,892 und US 5,041,496 beschriebenen Pfropfpolymere. Der Inhalt dieser Patente ist ausdrücklich auch Bestandteil vorliegender Offenbarung.

Die den erfindungsgemäßen Hydrogelen zugrunde liegenden hydrophilen, hochquellfähigen Hydrogele sind bevorzugt vernetzt, d.h. sie enthalten Verbindungen mit mindestens zwei Doppelbindungen, die in das Polymernetzwerk einpolymerisiert sind.

Geeignete Vernetzer sind insbesondere Methylenbisacryl-bzw. -methacrylamid, Ester ungesättigter Mono- oder Polycarbonsäuren von Polyolen, wie Diacrylat oder Triacrylat, z.B. Butandiol- oder Ethylenglykoldiacrylat bzw. -methacrylat sowie Trimethylolpropantriacrylat und Allylverbindungen wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in der EP-A 343 427 beschrieben sind. Der Inhalt der EP-A 343 427 ist ausdrücklich auch Bestandteil der vorliegenden Offenbarung.

Darüber hinaus sind die den erfindungsgemäßen Hydrogelen zugrunde liegenden hydrophilen, hochquellfähigen Hydrogele besonders bevorzugt in an sich bekannter Weise in wäßriger Gelphase nachvernetzt oder als gemahlene und abgesiebte Polymerpartikel oberflächenvernetzt. Dazu geeignete Vernetzer sind Verbindungen, die mindestens zwei Gruppen enthalten, die mit den Carboxylgruppen des hydrophilen Polymeren kovalente Bindungen bilden können. Geeignete Verbindungen sind beispielsweise Di- oder Polyglycidylverbindungen, wie Phosphonsäurediglycidylester, Alkoxysilylverbindungen, Polyaziridine, Polyamine oder Polyamidoamine, wobei die genannten Verbindungen auch in Mischungen untereinander verwendet werden können (siehe beispielsweise EP-A 83 022, EP-A 543 303 und EP-A 530 438). Als Vernetzer geeignete Polyamidoamine sind insbesondere in der EP-A 349 935 beschrieben. Der Inhalt der vorstehend genannten Patentanmeldungen ist ausdrücklich Bestandteil auch der vorliegenden Offenbarung.

Die den erfindungsgemäßen Hydrogelen zugrunde liegenden hydrophilen, hochquellfähigen Hydrogele können durch bekannte Polymerisationsverfahren hergestellt werden. Bevorzugt ist die Polymerisation in wäßriger Lösung nach dem Verfahren der sogenannten Gelpolymerisation. Dabei werden 15 bis 50 gew.%ige wäßrige Lösungen eines oder mehrerer hydrophiler Monomerer und gegebenenfalls einer geeigneten Pfropfgrundlage in Gegenwart eines Radikalinitiators bevorzugt ohne mechanische Durchmischung unter Ausnutzung des Trommsdorff-Norrish-Effektes (Bios Final Rep. 363.22; Makromol. Chem. 1, 169 (1947)), polymerisiert.

Die Polymerisationsreaktion kann im Temperaturbereich zwischen 0°C und 130°C, vorzugsweise zwischen 10°C und 100°C, sowohl bei Normaldruck als auch unter erhöhtem Druck durchgeführt werden. Wie üblich kann die Polymerisation auch in einer Schutzgasatmosphäre, vorzugsweise unter Stickstoff, ausgeführt werden.

Die erfindungsgemäßen Hydrogele können dadurch hergestellt werden, daß die nicht reaktiven, wasserunlöslichen filmbildenden Polymere in an sich bekannter Weise im gewünschten Gewichtsverhältnis auf die zugrunde liegenden hydrophilen, hochquellfähigen Hydrogele aufgebracht werden. Dieses Aufbringen geschieht bevorzugt in Mischern, wie beispielsweise Zwillingstrommelmischern, sogenannten "ZIG-ZAG"-Mischern, horizontal arbeitenden Pflugscharmischern, wie z.B. Lödige-Mischern oder Kegel-Schneckenmischern oder senkrecht zylindrischen Mischern mit koaxial rotierenden Messern oder auch Wirbelschichtmischern.

Die nicht reaktiven, wasserunlöslichen filmbildenden Polymere werden dabei bevorzugt in Form einer wäßrigen Polymerdispersion, Polymeremulsion oder Polymersuspension eingesetzt. Sie können aber auch in Form einer Lösung in einem organischen Lösungsmittel oder in einem Gemisch aus Wasser und einem organischen wassermischbaren Lösungsmittel eingesetzt werden. Auch die genannten wäßrigen Dispersionen, Emulsionen und Suspensionen können einen Anteil an organischem gegebenenfalls wassermischbaren Lösungsmittel enthalten.

Geeignete organische Lösungsmittel sind beispielsweise aliphatische und aromatische Kohlenwasserstoffe, Alkohole, Ether, Ester und Ketone wie beispielsweise n-Hexan, Cyclohexan, Toluol, Xylol, Methanol, Ethanol, i-Propanol, Ethylenglykol, 1,2-Propandiol, Glycerin, Diethylether, Methyltriglykol, Polyethylenglykole mit mittlerem Molekulargewicht Mw von 200 - 10.000, Ethylacetat, n-Butylacetat, Aceton und 2-Butanon.

Geeignete wassermischbare organische Lösungsmittel sind beispielsweise aliphatische (C₁-C₄)-Alkohole wie beispielsweise Methanol, i-Propanol, t-Butanol, mehrwertige Alkohole wie beispielsweise Ethylenglykol, 1,2-Propandipol und Glycerin, Ether wie beispielsweise Methyltriglykol und Polyethylenglykole mit mittlerem Molekulargewicht Mw von 200 - 10,000 sowie Ketone wie beispielsweise Aceton und 2-Butanon.

Die erfindungsgemäßen Hydrogele zeichnen sich durch eine hervorragende mechanische Stabilität, insbesondere Abriebfestigkeit, aus. Dies gilt besonders bei der Einarbeitung in Hygieneartikel. Außerdem weisen sie lediglich eine minimale Staubentwicklung auf.

Sie sind deshalb in hervorragender Weise als Absorptionsmittel für Wasser und wäßrige Flüssigkeiten, wie Urin oder Blut, in Hygieneartikeln wie Baby- und Erwachsenenwindeln, Binden, Tampons und dergleichen geeignet. Sie können aber auch als Bodenverbesserungsmittel in Landwirtschaft und Gartenbau, als Feuchtigkeitsbindemittel bei der Kabelummantelung sowie zum Eindicken wäßriger Abfälle verwendet werden.

Von den in nachfolgenden Beispielen beschriebenen erfindungsgemäßen Hydrogele wurde die Abriebfestigkeit bestimmt. Dies erfolgte in einer zylindrischen Porzellanmühle eines Innendurchmessers von 11 cm, einer inneren Höhe von 11,5 cm, einem Fassungsvolumen von ca. 1100 ml und dazugehörigen Metallkugeln (32 Stück mit einem Durchmesser von je ca. 0,9 cm und einem Gewicht von je ca. 16,5 g sowie 1 Stück mit einem Durchmesser von ca. 6,4 cm und einem Gewicht von ca. 1324 g) mit einem Gesamtgewicht von ca. 1852 g. Das Gefäß wurde mit den Kugeln sowie jeweils 100 g des zu prüfenden Polymerpulvers befüllt, verschlossen und für 30 Minuten bei 60 UpM auf entsprechendem Walzenantrieb gerollt. Das Polymerpulver wurde vor und nach dieser Behandlung einer Siebanalyse unterzogen, wobei insbesondere der Anteil im unteren Kornbereich und die Absorption unter Druck (AUL) bei unterschiedlicher Druckbelastung und Flächenbelegung bestimmt wurden.

Die Absorption unter Druck wurde in bekannter Weise, wie beispielsweise in der EP-A 339 461 beschrieben, bestimmt.

### Beispiel 1

In einem 1000 ml Rundkolben wurden 200 g Methanol vorgelegt, 2,0 g des Handelsproduktes ® Mowital B30T (® Mowital ist ein eingetragenes Warenzeichen der Firme Hoechst AG, Frankfurt am Main, Bundesrepublik Deutschland), eines Polyacetals auf Basis eines niedrig acetalisierten Polyvinylbutyrals, darin gelöst, 200 g eines Superabsorbers, hergestellt analog Beispiel 5 der DE-A 4138408, zugegeben und am Rotationsverdampfer durch 15minütiges Drehen bei mittlerer Gechwindigkeit homogen vermischt. Anschließend wurde das Methanol unter vermindertem Druck abdestilliert und das Pulver bei 50°C im Trockenschrank im Vakkum zur Entfernung des Rest-Methanols nachgetrocknet. Eventuell gebildete Klumpen wurden durch Absieben über ein Sieb mit 0,85 mm Maschenweite entfernt.

Von dieser Ware wurde die Abriebfestigkeit wie oben beschrieben bestimmt. Die Absorption unter Druck wurde bei einer Druckbelastung von 60 g/cm² und einer Flächenbelegung von 0,02 g/cm² ermittelt, wobei die Kornfraktion 0,3 bis 0,6 mm verwendet wurde. Das Ergebnis ist Tabelle 1 zu entnehmen.

Der oben beschriebene Versuch wurde mit zwei weiteren handelsüblichen ® Mowital-Typen wiederholt. Die Ergebnisse sind ebenfalls Tabelle 1 zu entnehmen.

**Tabelle 1**

| ®Mowital-Typ | vor Abriebtest | | nach Abriebtest | |
|---|---|---|---|---|
| | AUL | Kornanteil <0,2 mm | AUL | Kornanteil <0,2mm |
| ohne Nachbehandlung | 22,2 | 14,2 | 12,2 | 20,0 |
| B 30 T | 24,6 | 7,1 | 15,2 | 14,6 |
| B 60 T | 24,8 | 7,0 | 15,1 | 14,1 |
| B 69 SF | 24,4 | 4,3 | 16,5 | 14,4 |

### Beispiel 2:

In einem 500 ml Rundkolben wurden 50 g oberflächennachvernetztes Superabsorber-Granulat, hergestellt analog Beispiel 10 der DEA 4138408, vorgelegt und 2 g des Handelsproduktes ® Mowilith-Dispersion LDM 7460 (® Mowilith ist ein eingetragenes Warenzeichen der Firma Hoechst AG, Frankfurt am Main), einer weichmacherfreien, wäßrigen Dispersion auf Basis von Acryl- und Methacrylsäureestern, verdünnt mit 30 g Methanol, zugegeben und am Rotationsverdampfer durch 15 minütiges Drehen bei mittlerer Geschwindigkeit homogen vermischt. Anschließend wurde das Methanol unter vermindertem Druck abdestilliert und das Pulver bei 50°C im Trockenschrank im Vakuum zur Entfernung des Rest-Methanols nachgetrocknet. Eventuell gebildete Klumpen wurden durch Absieben über ein Sieb mit 0,85 mm Maschenweite entfernt. Von dieser Ware wurde die Abriebfestigkeit wie in Beispiel 1 angegeben bestimmt.

Der Versuch wurde mit drei weiteren ® Mowilith-Typen wiederholt. Der Ergebnisse sind Tabelle 2 zu entnehmen.

**TABELLE 2**

| ®Mowilith-Typ | vor Abriebtest | | nach Abriebtest | |
|---|---|---|---|---|
| | AUL | Kornanteil <0,2 mm | AUL | Kornanteil <0,2mm |
| ohne Nachbehandlung | 16,9 | 13,5 | 12,6 | 22,5 |
| LDM 7460 | 21,8 | 8,1 | 19,5 | 12,5 |
| LDM 7410 | 17,9 | 10,2 | 15,9 | 15,4 |
| DH 257 | 20,7 | 7,5 | 18,3 | 13,0 |
| DM 1062 | 21,5 | 6,2 | 19,6 | 12,7 |

### Beispiel 3:

In einem Telschig Laborsprühmischer RSM 6-60 von 6 l Inhalt wurden 1 kg Superabsorber, hergestellt analog Beispiel 5 der DE-A 4138408 vorgelegt. Unter Mischen wurde im Verlauf von 5 Minuten mit Hilfe einer Zweistoffdüse eine Mischung aus 20 g ® Mowilith-Dispersion LDM 7460 und 13 g Wasser aufgesprüht und 3 Minuten nachgemischt. Das Produkt wurde anschließend im Trockenschrank 30 Minuten bei 140°C nachgetrocknet. Eventuell gebildete Klumpen wurden durch Absieben über ein Sieb mit 0,85 mm Maschenweite entfernt. Von dieser Ware wurde die Abriebfestigkeit wie in Beispiel 1 angegeben bestimmt, wobei aber die AUL bei einer Druckbelastung von 40 g/cm² und einer Flächenbelegung von 0,032 g/cm² gemessen wurde.

Der Versuch wurde mit drei weiteren ® Mowilith-Typen wiederholt. Die Ergebnisse sind Tabelle 3 zu entnehmen.

**Tabelle 3**

| ®Mowilith-Typ | vor Abriebtest | | nach Abriebtest | |
|---|---|---|---|---|
| | AUL | Kornanteil <0,3 mm | AUL | Kornanteil <0,3mm |
| ohne Nachbehandlung | 23,0 | 19,5 | 15,9 | 29,3 |
| LDM 7460 | 28,2 | 14,1 | 27,4 | 20,0 |
| LDM 7751 | 23,7 | 16,2 | 19,2 | 22,5 |
| LDM 7736 | 22,1 | 15,8 | 18,6 | 21,4 |
| DH 257 | 27,8 | 13,8 | 26,2 | 18,9 |

## Patentansprüche

1. Hydrophiles, hochquellfähiges Hydrogel, **dadurch gekennzeichnet, daß** es mit einem nicht reaktiven, filmbildenden Polymer beschichtet ist, das im Temperaturbereich zwischen -1°C und 130°C Filmbildungsvermögen aufweist, und dabei wasserunlösliche aber wasserdurchlässige oder in wäßrigen Lösungen quellbare Polymerfilme bildet, wobei das filmbildende Polymer in Mengen von > 0,5 bis 20 Gew. -% bezogen auf das Hydrogel eingesetzt wird.

2. Hydrogel nach Anspruch 1, **dadurch gekennzeichnet, daß** das Polymer einen Polymerenfilm mit einem Reißfestigkeitswert von 0,5 bis 15 Newton/mm und einem Reißdehnungswert von 100 % bis 1000 % bildet.

3. Hydrogel nach einem oder mehreren der Ansprüche 1 bis 2, **dadurch gekennzeichnet, daß** das Polymer ein Homo- oder Copolymerisat von Vinylestern ist.

4. Hydrogel nach einem oder mehreren der Ansprüche 1 bis 2, **dadurch gekennzeichnet, daß** das Polymer ein Homo- oder Copolymersat von Acryl- oder Methacrylsäureestern ist.

5. Hydrogel nach einem oder mehreren der Ansprüche 1 bis 2, **dadurch gekennzeichnet, daß** das Polymer ein filmbildendes Polymer auf Basis Polyacetal, Polyurethan, Polyharnstoff, Polysiloxan, Polyamid, Polyester, Polyepoxid oder Polycarbonat ist.

6. Hydrogel nach einem oder mehreren der Ansprüche 1 bis 5 **dadurch gekennzeichnet, daß** es ein Polymer aus (co)-polymerisierten hydrophilen Monomeren, ein Pfropf(co)polymer von einem oder mehreren hydrophilen Monomeren auf eine geeignete Pfropfgrundlage, ein vernetzter Cellulose- oder Stärkeether oder ein in wäßrigen Flüssigkeiten quellbarer Naturstoff ist.

7. Verfahren zur Herstellung eines Hydrogels gemäß einem oder mehreren der Ansprüche 1 bis 6, **dadurch gekennzeichnet, daß** das nicht reaktive, wasserunlösliche filmbildende Polymere auf das zugrunde liegende hydrophile, hochquellfähige Hydrogel aufgebracht wird.

8. Verwendung der Hydrogele gemäß einem oder mehreren der Ansprüche 1 bis 6 als Absorptionsmittel für Wasser und wäßrige Flüssigkeiten.

## Claims

1. A hydrophilic, highly swellable hydrogel, which is coated with a non-reactive, film-forming polymer which has a film formation capacity in the temperature range between -1°C and 130°C and at the same time forms polymer films which are water-insoluble but permeable to water or swellable in aqueous solutions the film-forming polymer being employed in amounts of > 0.5 to 20% by weight, based on the hydrogel.

2. A hydrogel as claimed in claim 1, wherein the polymer forms a polymer film having a tensile strength value of 0.5 to 15 newtons/mm and an elongation at break value of 100 % to 1000 %.

3. A hydrogel as claimed in claim 1 or 2, wherein the polymer is a homo- or copolymer of vinyl esters.

4. A hydrogel as claimed in claim 1 or 2, wherein the polymer is a homo- or copolymer of acrylic or methacrylic acid esters.

5. A hydrogel as claimed in claim 1 or 2, wherein the polymer is a film-forming polymer based on polyacetal, polyurethane, polyurea, polysiloxane, polyamide, polyester, polyepoxide or polycarbonate.

6. A hydrogel as claimed in one or more of claims 1 to 5 which is a polymer of (co)polymerized hydrophilic monomers, a graft (co)polymer of one or more hydrophilic monomers on a suitable graft base, a crosslinked cellulose ether or starch ether, or a naturally occurring substance which is swellable in aqueous liquids.

7. A process for the preparation of a hydrogel as claimed in one or more of claims 1 to 6, wherein the non-reactive, water-insoluble film-forming polymer is applied to the hydrophilic, highly swellable hydrogel on which it is based.

8. The use of the hydrogels as claimed in one or more of claims 1 to 6 as absorbents for water and aqueous liquids.

## Revendications

1. Hydrogel hydrophile à capacité de gonflement élevée, **caractérisé en ce qu'**il est enrobé d'un polymère filmogène non réactif, présentant une capacité filmogène dans une plage de température entre -1°C et 130°C, et formant des films polymères insolubles dans l'eau mais perméables à l'eau, ou capables de gonflement dans des solutions aqueuses, le polymère filmogène étant mis en oeuvre en quantités de > 0,5 à 20% en poids, par rapport à l'hydrogel.

2. Hydrogel selon la revendication 1, **caractérisé en ce que** le polymère forme un film polymère présentant une résistance au déchirement de 0,5 à 15 Newton/mm et une élongation de rupture de 100% à 1000%.

3. Hydrogel selon l'une ou plusieurs des revendications 1 à 2, **caractérisé en ce que** le polymère est un homopolymère ou un copolymère d'esters vinyliques.

4. Hydrogel selon l'une ou plusieurs des revendications 1 à 2, **caractérisé en ce que** le polymère est un homopolymère ou un copolymère d'esters d'acide acrylique ou méthacrylique.

5. Hydrogel selon l'une ou plusieurs des revendications 1 à 2, **caractérisé en ce que** le polymère est un polymère filmogène à base de polyacétal, de polyuréthanne, de polyurée, de polysiloxane, de polyamide, de polyester, de polyépoxyde ou de polycarbonate.

6. Hydrogel selon l'une ou plusieurs des revendications 1 à 5, **caractérisé en ce qu**'il s'agit d'un polymère à base de monomères hydrophiles (co)polymérisés, d'un (co)polymère de greffage d'un ou plusieurs monomères hydrophiles sur une base de greffage adéquate, d'un éther cellulosique ou d'un éther d'amidon réticulé, ou d'une substance naturelle gonflable dans des liquides aqueux.

7. Procédé de préparation d'un hydrogel selon l'une ou plusieurs des revendications 1 à 6, **caractérisé en ce que** l'on applique des polymères filmogènes non réactifs et insolubles dans l'eau sur l'hydrogel hydrophile à haute capacité de gonflement sous-jacent.

8. Utilisation des hydrogels selon l'une ou plusieurs des revendications 1 à 6 comme agent d'absorption de l'eau et de liquides aqueux.
